Europäisches Patentamt

European Patent Office

Office européen des brevets

(11) Publication number: **0 061 742**
**B1**

# (12) EUROPEAN PATENT SPECIFICATION

(45) Date of publication of patent specification: **11.12.85**

(21) Application number: **82102566.5**

(22) Date of filing: **26.03.82**

(51) Int. Cl.⁴: **F 16 B 15/04**

(54) **Nail.**

(30) Priority: **31.03.81 JP 46736/81**

(43) Date of publication of application:
**06.10.82 Bulletin 82/40**

(45) Publication of the grant of the patent:
**11.12.85 Bulletin 85/50**

(84) Designated Contracting States:
**AT DE FR NL SE**

(56) References cited:
**US-A-2 603 121**
**US-A-2 751 052**
**US-A-3 466 967**
**US-A-3 812 817**
**US-A-3 874 263**
**US-A-4 213 373**

(73) Proprietor: **Wakai Sangyo Co. Ltd.**
**2, Higashi Shimizu-machi Minami-ku Osaka-shi**
**Osaka (JP)**

(72) Inventor: **Wakai, Takao**
**3-2, Morikawachi Nishi 2-chome**
**Higashi Osaka-shi Osaka (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

The present invention relates to a nail comprising two legs with parallel web portions secured together at the top thereof, each leg being formed with at least one rib at a longitudinal edge of the web portion extending towards the respective other web portion, so that a tubular space of generally rectangular cross section is formed between said web portions and ribs, when the nail is driven in a material.

For use with wood and other materials having a good restoring elasticity, ordinary nails having a straight shaft provide a sufficient fastening force because the material contracts and clamps the nail when it is driven thereinto.

Some kinds of material having no restoring elasticity such as foamed concrete and heat insulating materials, hardly act on the nail to prevent it from loosening or getting off, unlike wood and similar materials. With such materials as foamed concrete, the force acting on the nail is only the frictional force between the nail and the member where they contact each other. Therefore, nails having a straight shaft cannot be used with such materials because they tend to loosen and come off if subjected to a slight shock or vibration.

To solve this problem, various nails have been proposed which have their shaft splitted longitudinally into a plurality of parts adapted to spread apart from each other at their tip when the nail is driven into the material.

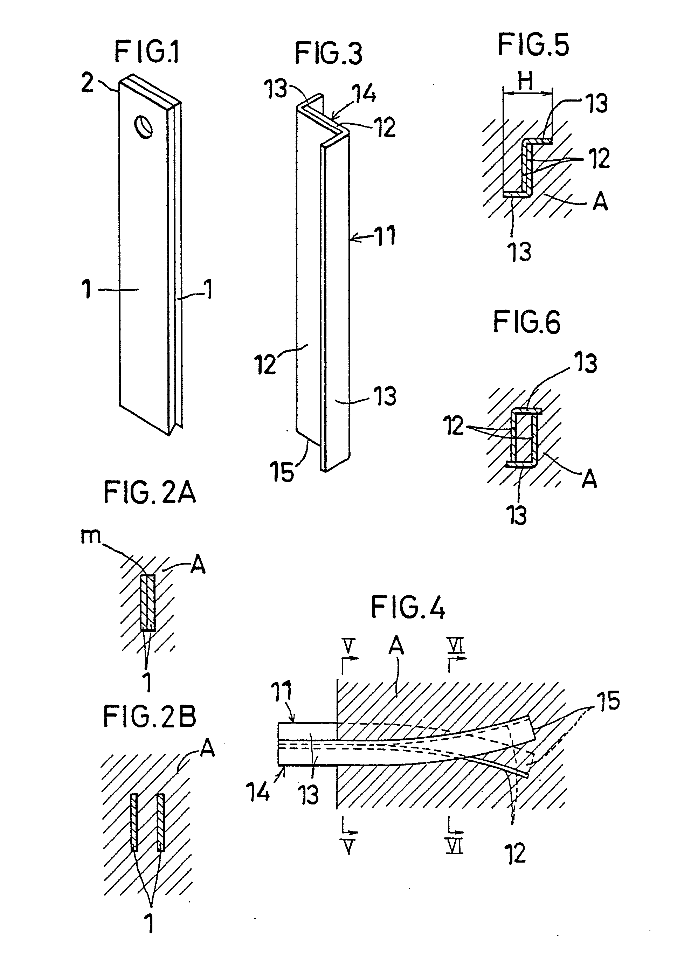

Figs. 1 and 2 show one example of conventional nails of such a known type. It has two legs 1 secured to each other at their top 2 with their bottom ends left free so as to spread apart when the nail is driven.

Such a nail has been found not satisfactory. Although the legs spread apart at their tip in the material, they come off relatively easily along their holes if a pulling force is applied. Thus, a sufficient fastening cannot be expected. When the nail is driven into a member A, the legs spread apart and bite into the member. The material caught and compressed between the legs acts on the nail to some degree to prevent the nail from coming off. However, its effect is not sufficient because the compressed material is not completely locked or confined but can escape sideways, as will be seen from Fig. 2B.

To cope with this difficulty it is known from US—A—38 12 817 to use a nail comprising two legs with parallel web portions secured together at the top thereof, each leg being formed with at least one rib at a longitudinal edge of the web portion extending towards the respective other web portion, so that a tubular space of generally rectangular cross section is formed between said web portions and ribs, when the nail is driven in a material.

However, this nail is rather large in cross section before it is driven and therefore can only be driven into the material when it not yet has completely set up. If a pulling force is applied to this nail, such a nail relatively easily comes of the material again along the holes of the legs.

It is the object of the present invention to provide a nail with small dimensions which will not loosen or come off easily if subjected to vibrations or pulling forces.

This object is solved according to the invention by the features that before the nail is driven in a material the parallel web portions are in mutual contact with each other, in that each leg presents one single rib extending generally at right angle from the edge of the respective web portion and in that the two respective ribs are formed at respective edges of the web portions which are distant from each other.

Other objects and features of the present invention will become apparent from the following description taken with reference to the accompanying drawings, in which:

Fig. 1 is a perspective view of a conventional nail of this type;

Fig. 2A is a horizontal sectional view of the same driven in a material at a point near its top end;

Fig. 2B is a similar view of the same at its bottom end;

Fig. 3 is a perspective view of the first embodiment;

Fig. 4 is a horizontal sectional view of the same showing how its tip spreads when it is driven;

Fig. 5 is a sectional view taken along line V—V in Fig. 4;

Fig. 6 is a sectional view taken along line VI—VI in Fig. 4;

Fig. 7 is a sectional side view of the tip of the same;

Fig. 8 is a similar view of a variant of the tip;

Fig. 9 is a perspective view of the second embodiment;

Fig. 10 is a perspective view of the third embodiment;

Fig. 11 is a perspective view of a variant of the top portion of the nail;

Fig. 12 is a similar view of another variant of the top portion;

Fig. 13 is a similar view of a further variant of the top portion;

Fig. 14 is a perspective view of the fourth embodiment; and

Fig. 15 is a perspective view of the fifth embodiment.

Referring to Figs. 3—7 showing the first embodiment, a nail 11 comprises two legs 12 each formed with a rib 13 at one side thereof. These two legs 12 are put together so that their ribs will be at the opposite sides of the nail and extend toward each other leg.

The two legs 12 are secured together by welding or by means of a bolt at a point adjacent to their top 14. Their lower ends are left free so that they can spread away from each other when the nail is driven. The legs 12 may be made from steel plate. They may also be formed by bending a single strip of steel plate.

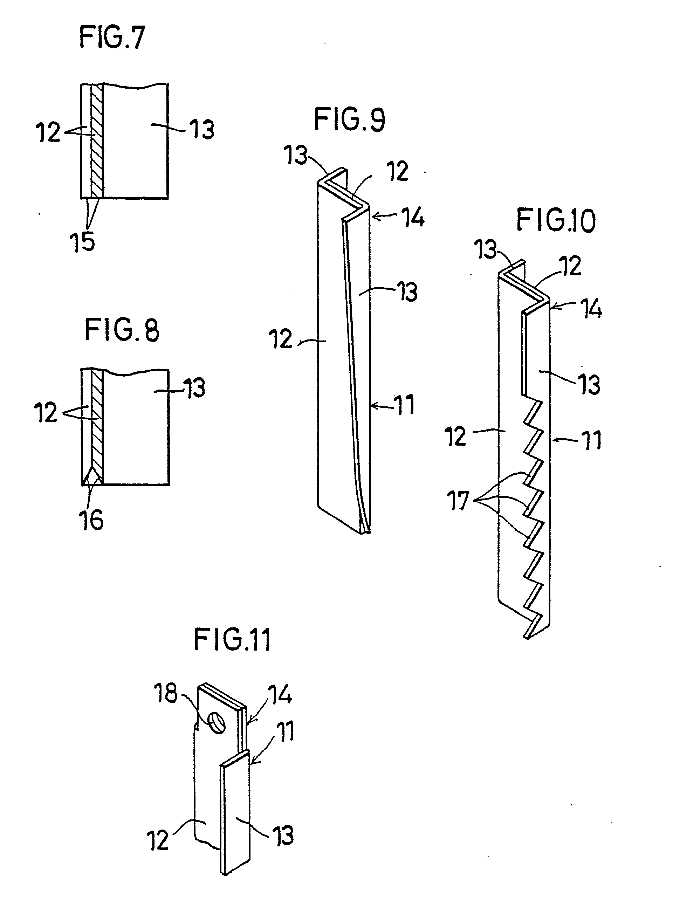

In the first embodiment, the legs 12 have a flat surface 15 at their bottom (Fig. 7). But, they may have an inwardly tapered surface 16 (Fig. 8) so that their lower ends will spread more easily when the nail is driven.

The rib 13 on each leg 12 extends from the leg at a right angle to the leg toward the other leg with its inner surface butting against the corresponding edge of the other leg. The angle of the rib with respect to the leg body may be freely selected.

Although in the first embodiment the rib 13 has a uniform width from top to bottom of each leg, it may have a gradually decreasing width (Fig. 9) toward its bottom end so that the rib can be bent more easily from the leg body and the legs will spread more easily when the nail is driven.

The rib 13 may have a plurality of saw toothed shaped projections 17 on its edge (Fig. 10) to facilitate the spreading of the legs and to increase the resistance to a pulling force applied to the nail.

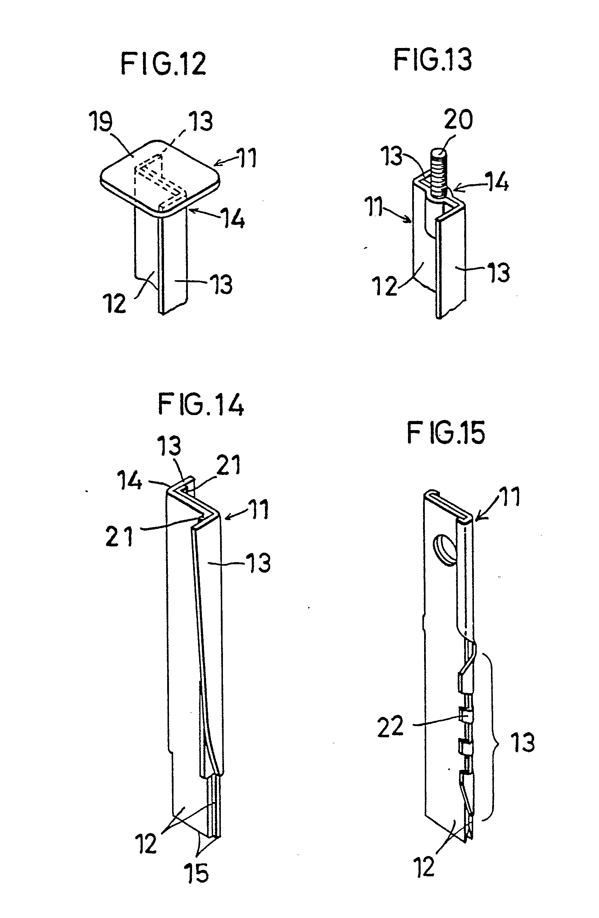

The nail 11 may be provided at its top with a hole 18 (Fig. 11) for a wire and so one, or with a cap 19 (Fig. 12) for stable driving of the nail and for the prevention of its damage, or with a threaded shaft 20 having a male screw (Fig. 13).

The rib 13 may not extend as far as to the top end of the leg 12 but short of it as shown in Fig. 11. It may also be formed with an outward bend at its top end to prevent the nail from being driven too deep.

Fig. 14 shows another embodiment in which the rib 13 of each leg has gradually decreasing width and does not extend as far as to the lower end of the leg but short of it. The bottom ends of the legs 12 serve as a guide when the nail is driven. Also, each leg 12 is formed with a further rib 21 at the side opposite to the side at which the rib 13 is formed, said further rib extending in a direction opposite to the direction which the rib 13 extends.

Fig. 15 shows a further embodiment in which each leg has a rib formed with a plurality of projections 22 and the legs are caulked together at one edge thereof instead of being welded or bolted to put them together.

The nail in accordance with the present invention is used to fasten e.g. metal fittings or an outer trim or covering to a member A of such a material as foamed concrete or a heat insulating material.

In use, the nail 11 is driven in an ordinary manner by striking its head 14. As the nail is driven, its legs advance into the member A and their tips gradually spread apart from each other because of the resistance acted thereon by the member. When the nail has been driven for a required distance, the legs 12 will get apart from each other at their tip as shown in Fig. 14.

As the legs advance into the member A, its material caught between the legs is compressed. Since the legs have a rib extending toward each other leg, they form a tubular space of a rectangular section between them as they spread apart, as best shown in Fig. 6. The material in this space is compressed and trapped with no place of escape. The trapped and compressed material serves to prevent the legs from getting out of the member A when a pulling force is applied to the nail. This, coupled with the spreading of the legs, provides a sufficient resistance to any pulling force. Even if the nail were pulled for some or other reason, the nail would not get off easily.

The provision of the ribs 13 gives the nail the maximum width H (Fig. 5), thus substantially increasing its load bearing capacity and preventing the member for getting damaged by the nail itself under load.

It will be understood from the foregoing that the nail according to the present invention will not come off or loosen easily even if it is used for members of such a material as foamed concrete.

## Claims

1. A nail comprising two legs with parallel web portions (12) secured together at the top (14) thereof, each leg being formed with at least one rib (13) at a longitudinal edge of the web portion (12) extending towards the respective other web portion, so that a tubular space of generally rectangular cross section is formed between said web portions (12) and ribs (13), when the nail is driven in a material, characterized in that before the nail (11) is driven in a material the parallel web portion (12) are in mutual contact with each other, in that each leg presents one single rib (13) extending generally at right angle from the edge of the respective web portions (12) and in that the two respective ribs (13) are formed at respective edges of the web portions (12) which are distant from each other.

2. The nail as claimed in claim 1 wherein said legs each have a flat bottom edge surface (15).

3. The nail as claimed in claim 1 wherein said legs each have an inwardly tapered bottom edge surface (16).

4. The nail as claimed in claim 1, further comprising a threaded shaft (20) at top thereof.

5. The nail as claimed in claim 1 wherein said rib is of a uniform width.

6. The nail as claimed in claim 1 wherein said rib is of a gradually decreasing width toward the bottom of the nail.

7. The nail as claimed in claim 1 wherein said rib is formed with a plurality of tooth-like projections (17) on the edge thereof.

8. The nail as claimed in claim 1 wherein each of said legs is formed with a further rib (21) at a side opposite to the side where said rib (13) is provided, said further rib extending in the direction opposite to that in which the first rib (13) extends.

9. The nail as claimed in claim 1 wherein said rib does not extend for the whole length of said leg.

10. The nail as claimed in claim 1 wherein said legs are secured together by caulking their edge against each other leg at the upper portion of the leg.

## Patentansprüche

1. Nagel mit zwei Beinen mit parallelen Streifenteilen (12), die an ihrem oberen Ende (14) aneinander befestigt sind, wobei jedes Bein mit mindestens einer Rippe (13) an der Längskante des Streifenteils (12) versehen ist, die sich in Richtung des jeweils anderen Streifenteils erstreckt, so daß ein Hohlraum vom im wesentlichen rechtwinkeligen Querschnitt ausgebildet wird, wenn der Nagel in ein Material eingetrieben ist, dadurch gekennzeichnet, daß vor dem Eintreiben des Nagels (11) in ein Material die parallelen Streifenteile (12) sich gegenseitig berühren, daß jedes Bein eine einzige Rippe (13) aufweist, die sich im wesentlichen rechtwinkelig von der Kante des jeweiligen Streifenteils (12) aus erstreckt und daß die Rippe (13) an den jeweils voneinander beabstandeten Kanten der Streifenteile (12) angeordnet sind.

2. Nagel nach Anspruch 1, dadurch gekennzeichnet, daß die Beine flache Bodenkantenflächen (15) haben.

3. Nagel nach Anspruch 1, dadurch gekennzeichnet, daß die Beine jeweils nach innen angeschrägte Bodenkantenflächen (16) haben.

4. Nagel nach Anspruch 1, dadurch gekennzeichnet, daß er am oberen Ende einen Gewindeschaft (20) aufweist.

5. Nagel nach Anspruch 1, dadurch gekennzeichnet, daß die Rippen (13) eine gleichbleibende Breite haben.

6. Nagel nach Anspruch 1, dadurch gekennzeichnet, daß die Rippen (13) in Richtung auf das Unterteil des Nagels eine abnehmende Breite aufweisen.

7. Nagel nach Anspruch 1, dadurch gekennzeichnet, daß die Rippen (13) mit einer Vielzahl von zahnförmigen Vorsprüngen (17) an einer Kante versehen sind.

8. Nagel nach Anspruch 1, dadurch gekennzeichnet, daß jedes der Beine mit einer weiteren Rippe (21) gegenüber der Seite, wo die Rippe (13) vorgesehen ist, versehen ist, welche sich in die entgegengesetzte Richtung erstreckt, in die sich die erste Rippe (13) erstreckt.

9. Nagel nach Anspruch 1, dadurch gekennzeichnet, daß sich die Rippen (13) nicht über die gesamte Länge der Beine erstrecken.

10. Nagel nach Anspruch 1, dadurch gekennzeichnet, daß die Beine (12) aneinander befestigt sind durch Überfalzen der beiderseitigen Kanten am oberen Teil des Beines.

## Revendications

1. Clou comprenant deux branches à âmes parallèles 12 fixées l'une à l'autre à leur sommet (14), chaque branche comportant au moins une ailette (13) prévue sur un bord longitudinal de l'âme (12) et dirigée vers l'autre âme respective, de sorte qu'un espace tubulaire de section transversale sensiblement rectangulaire est formé entre les âmes (12) et les ailettes (13), lorsque le clou est enfoncé dans un matériau, caractérisé en ce que, avant l'enfoncement du clou (11) dans un matériau, les âmes parallèles (12) sont en contact mutuel, en ce que chaque branche comporte une ailette unique (13) sensiblement perpendiculaire au bord de l'âme respectives (12), et en ce que les deux ailettes respectives (13) sont formées aux bords respectifs des âmes (12) qui sont distants l'une de l'autre.

2. Clou suivant la revendication 1, dans lequel les branches présentent chacune une surface de bord inférieur (15) plate.

3. Clou suivant la revendication 1, dans lequel les branches présentent chacune une surface de bord inférieur (16) inclinée vers l'intérieur.

4. Clou suivant la revendication 1, comprenant également une tige filetée (20), à son sommet.

5. Clou suivant la revendication 1, dans lequel l'ailette est de largeur constante.

6. Clou suivant la revendication 1, dans lequel l'ailette est de largeur progressivement décroissante vers l'extrémité inférieure du clou.

7. Clou suivant la revendication 1, dans lequel l'ailette comporte une pluralité de saillies (17) en forme de dent, sur son bord.

8. Clou suivant la revendication 1 dans lequel chacune des branches comporte une autre ailette (21) d'un côté opposé au côté ou est prévue l'ailette (13), ladite autre ailette s'étendant dans la direction opposée à celle dans laquelle s'étend la première ailette (13).

9. Clou suivant la revendication 1, dans lequel l'ailette ne s'étend pas sur toute la longueur de la branche.

10. Clou suivant la revendication 1, dans lequel les branches sont fixées l'une à l'autre, par sertissage de leur bord contre chaque autre branche, à la partie supérieure de la branche.

FIG.1

FIG.3

FIG.5

FIG.2A

FIG.6

FIG.2B

FIG.4

FIG.7

12 — 13
15

FIG.9

13 — 12
14
13
12
11

FIG.10

13 — 12
14
13
12 — 11
17

FIG.8

12 — 13
16

FIG.11

18
14
11
12 — 13

FIG.12

FIG.13

FIG.14

FIG.15